# EUROPÄISCHE PATENTSCHRIFT

(11) **EP 3 359 851 B1**
(45) Veröffentlichungstag und Bekanntmachung des Hinweises auf die Patenterteilung: **13.04.2022**
(21) Anmeldenummer: 16781071.2
(22) Anmeldetag: 28.09.2016
(51) Int. Cl.: F16K 31/06, F16K 1/36

(54) **ELEKTROMAGNETISCHES SCHALTVENTIL**
ELECTROMAGNETIC SWITCH VALVE
ÉLECTROVANNE DE COMMANDE

(30) Priorität: 05.10.2015 DE 102015116909
(43) Veröffentlichungstag der Anmeldung: 15.08.2018
(73) Patentinhaber: Kendrion (Villingen) GmbH, 78048 Villingen-Schwenningen (DE)
(72) Erfinder: BERGFELD, Björn, 72336 Balingen-Endingen (DE); FLÜHS, Joachim, 78050 Villingen-Schwenningen (DE); ZELANO, Frank, 78112 St. Georgen (DE); BÜRK, Wolfgang, 78054 Villingen-Schwenningen (DE)
(74) Vertreter: Westphal, Mussgnug & Partner Patentanwälte mbB
(86) Internationale Anmeldenummer: PCT/EP2016/073116
(87) Internationale Veröffentlichungsnummer: WO 2017/060141

(56) Entgegenhaltungen:
- DE-A1- 10 200 915
- DE-A1- 10 258 859
- DE-A1- 10 332 345
- DE-A1-102005 061 509
- DE-A1-102008 030 454
- US-A1- 2002 079 472

## Beschreibung

Die Erfindung betrifft ein elektromagnetisches Schaltventil zum Öffnen oder Schließen z. B. eines Öl- oder Kühlmittelkreislaufes in einem Kraftfahrzeug gemäß den Merkmalen des Oberbegriffes des Patentanspruchs 1.

Solche elektromagnetischen Schaltventile sind hinlänglich bekannt und verfügen über einen Elektromagneten, der eine Spule und einen bewegbaren Anker aufweist. Der Anker ist mit einem Ventilelement gekoppelt, durch welches ein Ventilsitz in dem Kühlmittelkreislauf bei Bestromung der Spule verschlossen und abgedichtet werden kann, während bei Nichtbestromung der Spule der Ventilsitz offen gehalten ist. Dieser Zustand wird bei elektromagnetischen Schaltventilen als "normally open" bezeichnet. Solche elektromagnetischen Schaltventile finden insbesondere im Ölkreislauf von Motoren von Kraftfahrzeugen Verwendung, um den Motor schnell auf Betriebstemperatur zu bringen. So wird beim Starten des Motors die Erregerspule des elektromagnetischen Schaltventils bestromt, sodass der Ventilsitz geschlossen ist und sich das Kraftfahrzeugöl im Motor verhältnismäßig schnell erwärmen kann. Hat dieses Öl die Betriebstemperatur erreicht, wird das elektromagnetische Schaltventil stromlos geschaltet und der Ventilsitz freigegeben, sodass über die Kolbenspritzdüsen die Motorkolben gekühlt werden können. Insgesamt dient der Einsatz solcher elektromagnetischen Schaltventile bei Kraftfahrzeugmotoren zur Energieeinsparung und Emmissionsreduzierung beim Kaltstart.

Die bisher verwendeten elektromagnetischen Schaltventile zeichnen sich jedoch durch einen verhältnismäßig schweren Aufbau aus, der außerdem verhältnismäßig groß ist und damit platzraubend.

DE 10 2005 061 509 A1, DE 103 32 345 A1, DE 102 58 859 A1, DE 102 00 915 A1 und US 2002/0 079 472 A1 bilden weiteren Stand der Technik.

Hier setzt die vorliegende Erfindung an.

Die vorliegende Erfindung hat das Ziel, ein elektromagnetisches Schaltventil zum Öffnen oder Schließen in einem Öl- oder Kühlmittelkreislauf eines Kraftfahrzeuges anzugeben, das im Vergleich zu den bisher bekannten elektromagnetischen Schaltventilen in dieser Anwendung deutlich kleiner gebaut ist, ein geringeres Gewicht aufweist und hinsichtlich seines Verhaltens während der gesamten Hubstrecke des Ventilelementes eine hohe Performance aufweist.

Ein solches elektromagnetisches Schaltventil wird mit den Merkmalen des Patentanspruchs 1 bereitgestellt.

Dieses elektromagnetische Schaltventil zeichnet sich demnach dadurch aus, dass das Schaltventil druckausgeglichen ausgebildet ist und dass das Ventilelement des Schaltventils in Richtung des Ventilsitzes weisend mindestens annähernd hohlwandig ausgebildet ist.

Dies ist von Vorteil, da durch den Druckausgleich eine dem Druck proportionale Druckausgleichskraft über den gesamten Ventilhub wirkt und somit das Öffnen des Ventils unterstützt, die öffnenden Kräfte bei einem nicht hohlwandig ausgeführten Dichtelement aber vom Ventilhub abhängig sind, so dass diese trotz Bestromung nicht vollständig vom Ventilsitz abgehoben werden konnten, weil die im Betrieb auftretenden Fluidkräfte schließende Kräfte erzeugen, die das Ventilelement im Bereich seiner Endstellung in Ruheposition versuchten rückzustellen, sodass insgesamt keine hundertprozentige Offenstellung des Ventils erreicht werden konnte.

Durch diese beiden Maßnahmen ist es möglich, das Schaltventil deutlich kleiner zu bauen, wobei die im Betrieb auftretenden Fluidkräfte im Kühlmittelkreislauf nicht dazu führen, dass das Ventilelement aufgrund eines entstehenden Überdruckes von seiner Offenstellung selbsttätig in Richtung Ventilsitz gezogen wird. Dies wird dadurch erreicht, dass die im Strömungsbereich befindliche Fläche des Ventilelements zum eigentlichen Ventilsitz hin zurückversetzt angeordnet ist.

Weiterbildungen der Erfindung sind in den Unteransprüchen angegeben.

In einer Weiterbildung der Erfindung kann das Ventilelement in Richtung Ventilsitz mindestens annähernd topfförmig oder mindestens annähernd konkav gestaltet sein. Es liegt insbesondere auch im Rahmen der Verbindung, dass das Ventilelement als Hohlkugelsegment ausgebildet ist, wobei die Vertiefung dieses Hohlkugelsegments in Richtung Ventilsitz zeigt. Jegliche andere hohlwandige Ausbildung des Ventilelementes ist ebenfalls geeignet.

In einer anderen Weiterbildung der Erfindung ist das Ventilelement mit einem Ventilelementstößel verbunden, der wiederum mit dem Anker des Elektromagneten gekoppelt ist. Im einfachsten Fall kann das Ventilelement und der Ventilelementstößel einstückig ausgebildet sein und insbesondere zur Gewichtserleichterung auch aus Kunststoff oder anderen leichtbauenden Materialien, wie zum Beispiel Aluminium, bestehen. Dabei bietet es sich an, das Ventilelement als Spritzgussteil auszubilden.

Das dem Anker abgewandte Ende des Ventilstößels ist hierfür mit einem Ventilelementboden verbunden, von dem ein umlaufender Ventilelementkragen in Richtung Ventilsitz hervorspringt. Der Ventilelementkragen ist dabei zum Abdichten am Ventilsitz vorgesehen und liegt dort in geeigneter Weise an.

In einer zweckmäßigen Ausführungsform der Erfindung ist der Ventilelementkragen an seinem dem Ventilsitz zugewandten umlaufenden Rand abgeschrägt beziehungsweise abgerundet und als Kalottenabschnitt ausgebildet. Dieses Abschrägen beziehungsweise Abrunden erfolgt dabei insbesondere derart, dass der innere umlaufende Rand in dem so topfförmig gebildeten Ventilelement nach außen zum äußeren Rand des Ventilelements mit einem Radius zurückläuft und dort kürzer ist.

Um das elektromagnetische Schaltventil erfindungsgemäß druckausgeglichen zu gestalten, muss innerhalb des elektromagnetischen Schaltventils, also innerhalb seines Gehäuses, eine axiale Durchgangsbohrung vorgesehen sein, die als Druckausgleichsbohrung dient und einen Druckausgleichsraum an einer Seite des Ankers mit dem Druckmedium beaufschlagt, die dem Ventilelement gegenüberliegt. Es bietet sich hierbei an, dass das Ventilelement entlang seiner gesamten Länge, also das Ventilelement und ein etwaig zugehörender Ventilelementstößel, eine insbesondere axiale Durchgangsbohrung aufweist. Diese axiale Durchgangsbohrung ist zweckmäßigerweise mit einer entlang seiner gesamten Länge aufweisenden Durchgangsbohrung innerhalb des Ankers verbunden, sodass der erwähnte Druckausgleich geschaffen wird.

In einer Ausführungsform der Erfindung verfügt das elektromagnetische Schaltventil über eine Federeinrichtung, durch welche das Ventilelement im stromlosen Zustand des Schaltventils in einer den Ventilsitz geöffneten Stellung ("normally open") gehalten ist.

Durch die Tatsache, dass das elektromagnetische Schaltventil nach der Erfindung druckausgeglichen und der Ventilelementkragen in der beschriebenen Weise ausgeführt ist, kann die Bauraumreduzierung des elektromagnetischen Schaltventils erreicht werden. In Verbindung mit dem Umstand, dass bei dem elektromagnetischen Schaltventil nach der Erfindung die dem Ventilsitz zugewandte Kontur des Ventilelements besonders gestaltet ist, wird zudem erreicht, dass trotz einer geringeren Dimensionierung der Federkraft der Federeinrichtung das Ventilelement im stromlosen Zustand der Spule vollständig in seiner Offenstellung gehalten werden kann. Eine ausgezeichnete Performance des Schaltverhaltens des elektromagnetischen Schaltventils ist die Folge.

Es bietet sich an, das elektromagnetische Schaltventil nach der Erfindung in einen Motorblock eines Kraftfahrzeuges einzubauen. Hierfür ist der Ventilsitz in dem Motorblock des Kraftfahrzeuges eingearbeitet, wobei das elektromagnetische Schaltventil in oder an dem Motorblock gehalten, insbesondere eingeschraubt, ist, sodass das Ventilelement des Schaltventils den dort platzierten Ventilsitz sicher abdichten kann.

Wenngleich bisher lediglich davon gesprochen wurde, dass das elektromagnetische Schaltventil in den Ölkreislauf eines Kraftfahrzeuges eingebaut werden kann, liegt es selbstverständlich auch im Rahmen der Erfindung, dass ein derartiger Einbau auch in einen anderen Kühlmittelkreislauf eines Kraftfahrzeuges, zum Beispiel in den Kühlwasserkreislauf des Kfz, erfolgen kann.

Das elektromagnetische Schaltventil nach der Erfindung wird nachfolgend im Zusammenhang mit zwei Figuren anhand eines konkreten Ausführungsbeispieles erläutert. Es zeigen:
- Fig. 1: eine Schnittansicht durch das Ausführungbeispiel eines elektromagnetischen Schaltventils nach der Erfindung, und
- Fig. 2: das in Figur 1 mit "X" bezeichnete Detail im Bereich des Ventilsitzes und des Ventilelementes, wobei sowohl in Figur 1 als auch in Figur 2 der stromlose Zustand des elektromagnetischen Schaltventils, also dessen geöffneter Zustand, dargestellt ist.

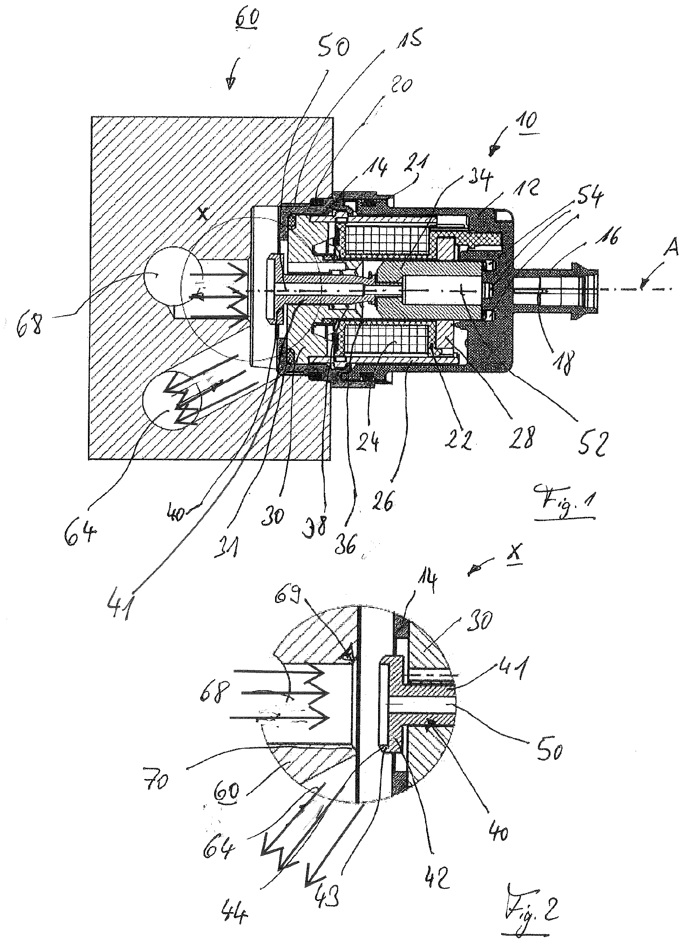

In den Figuren 1 und 2 bezeichnen, sofern nicht anders angegeben, gleiche Bezugszeichen gleiche Teile und haben gleiche Bedeutung.

Figur 1 zeigt die Schnittansicht eines elektromagnetischen Schaltventils 10, welches über ein hinteres Gehäuseteil 12 und ein vorderes Gehäuseteil 14 verfügt. Das vordere Gehäuseteil 14 besteht vorzugsweise aus Aluminium, kann aber auch aus Kunststoff gefertigt sein. Das hintere Gehäuseteil besteht vorzugsweise aus Kunststoff. Sie sind rohrförmig gestaltet und miteinander in geeigneter Weise verbunden, zum Beispiel verbördelt oder wenn beide Gehäuseteile aus Kunststoff gefertigt sind, verschweißt. Die beiden Gehäuseteile sind dabei über einen O-Ring 21 zueinander abgedichtet. Das vordere Gehäuseteil 14 verfügt über ein Gewinde 15, mit dem es in eine Öffnung eines Motorblocks 60 eingeschraubt wird. Dieses vordere Gehäuseteil 14 ist ebenfalls über einen O-Ring 20 zum Motorblock des Kraftfahrzeugs hin abgedichtet. An dem in Figur 1 rechts dargestellten Ende des hinteren Gehäuseteils 12 schließt sich ein Steckerflansch 16 an dem hinteren Gehäuseteil 12 an, innerhalb dem Kontaktstifte 18 platziert sind und durch welche eine im Inneren der beiden Gehäuseteile 12, 14 sitzenden Spule 24 zu kontaktieren.

Die Spule 24 ist konzentrisch um eine Achse A des elektromagnetischen Schaltventils gewickelt und sitzt auf einem Spulenträger 22, der in bevorzugter Art und Weise aus Kunststoff besteht. Der Spulenträger ist mit dem Bezugszeichen 22 versehen. In der rohrförmigen Öffnung des Spulenträgers 22 befindet sich eine Gleithülse 36 mit einem konstanten Innendurchmesser, auf die weiter unten noch näher eingegangen wird.

Zur Bildung eines magnetischen Kreises ist die Spule 22 an ihrem äußeren Umfang von einem metallischen Zylinder 26 umgeben. Zusätzlich befindet sich rechts von der Spule 22 eine metallische Rückschlussplatte 28. Links von der Spule 22 befindet sich ein Polkern 30, welcher zumindest annähernd eine mittige Öffnung hat mit einem Durchmesser, der in etwa dem Innendurchmesser der oben erwähnten Gleithülse 36 entspricht.

Die Innenöffnung des Polkerns 30 und die Innenöffnung der Gleithülse 36 dienen zur Aufnahme eines Ankers 34 sowie eines mit dem Anker 34 nicht erfindugsgemäß feststehend verbundenen Ventilelement 40. Der Anker 34 besteht aus magnetisch leitfähigem Material, insbesondere aus Metall, während das Ventilelement 40 und ein einstückig hieran angebundener Ventilelementstößel 41 zur Gewichtsreduzierung aus Kunststoff, vorzugsweise als Spritzgussteil, gebildet sein können. Der Ventilelementstößel 41 ist hierfür beispielsweise mit dem Anker 34 verschraubt oder in anderer geeigneter Art und Weise feststehend verbunden.

Er ist aber, erfindungsgemäß, ohne feststehende Verbindung zwischen Ventilelementstößel 41 und Anker 34 vorgesehen. . Dies hat den Vorteil, dass Winkelfehler zwischen Ankerlagerung und Ventilsitz leichter ausgeglichen werden können und sich der Ventilelementkragen leichter in den Ventilsitz einpasst. Hierzu ist aber eine Abdichtung zwischen Anker 34 und Ventilelementstößel 41 erforderlich, damit keine erhöhte Leckage auftritt. Dies kann vorzugsweise durch eine spezielle Dichtgeometrie am Bund des Ventilelementstößels 41, der auf dem Anker 34 aufliegt, vorzugsweise durch eine leicht konische Stirnfläche des Bundes oder durch ein weiteres Dichtelement z. B. aus Elastomer erfolgen.

Zusätzlich verfügt das in Figur 1 dargestellte elektromagnetische Schaltventil 10 über eine Federeinrichtung 38, die sich mit ihrem in Figur 1 dargestellten linken Ende an einem umlaufenden Vorsprung des Polkerns 30 und mit ihrem anderen Ende an einem flanschartigen Vorsprung des Ventilelementstößels 41 abstützt. Dabei sorgt die Federeinrichtung dafür, dass im nichtbestromten Zustand der Spule 24 das Ventilelement 40 samt Ventilelementstößel 41 und feststehend angebundenem Anker 34 in seine in Figur 1 dargestellte Endstellung gedrückt wird.

Wie Figur ebenfalls noch zeigt, ist der Polkern 30 über einen weiteren O-Ring 31 zum vorderen Gehäuseteil 14 des Schaltventils hin abgedichtet.

Das Ventilelement 40 ist, wie das in Figur 2 vergrößert dargestellte Detail X aus Figur 1 gut erkennen lässt, im stromlosen Zustand des Schaltventils 10 beabstandet zu einem ringförmig umlaufenden Ventilsitz 69 innerhalb des Motorblocks angeordnet. Dabei ist der umlaufende Ventilsitz 69 abgeschrägt zu einem Zulauf 68, der in den Motorblock 60 für den Zulauf eines Kühlmittels, insbesondere eines Öls, vorgesehen ist. Das Ventilelement 60 ist zum Abdichten dieses Ventilsitzes 69 vorgesehen. In dem in Figur 1 dargestellten Offenzustand des Schaltventils gelangt über den Zulauf 68 das Kühlmittel zu einem Ablauf 64. Den Lauf des Kühlmittels illustrieren die im Zulauf 68 und Ablauf 64 angedeuteten Pfeile mit ihrer Pfeilrichtung.

Wie besonders gut die Figur 2 erkennen lässt, ist das Ventilelement 40 zum Ventilsitz 69 hin noch immer gewölbt bzw. zurückspringend oder topfförmig ausgebildet. Im dargestellten Ausführungsbeispiel weist hierfür das Ventilelement 40 einen Ventilelementboden 42 auf, von dem sich an seinem äußeren Rand ein Ventilelementkragen 43 in Richtung Ventilsitz 69 erstreckt und zum Ventilsitz 69 hin ragt. Dabei ist der dem Ventilsitz 69 zugewandte Rand des Ventilelementkragens 43 abgeschrägt, vorzugsweise mit einem Radius versehen, der mit dem Winkel der Abschrägung am Ventilsitz 69 zur Abdichtung zusammenspielt und so auch bei einem Winkelversatz zwischen Ventilelementstößel und Ventilsitz eine zuverlässige Abdichtung über eine Linienberührung ermöglicht. Der Boden 42 ist damit zu einer Ebene, die orthogonal zur Achse A liegt, zurückgesetzt zum Ventilsitz 69 platziert, was im Betrieb des elektromagnetischen Schaltventils dazu führt, dass kein Unterdruck mehr auftritt und das Ventilelement im stromlosen Zustand versucht, in Richtung Ventilsitz 69 zu ziehen.

Das in den Figuren 1 und 2 dargestellte elektromagnetische Schaltventil ist zudem druckausgeglichen ausgebildet. Hierfür verfügt das Ventilelement 40 und der Ventilelementstößel 41 über eine Durchgangsbohrung 50, die in eine Durchgangsbohrung 52 des Ankers 34 übergeht und rechts in Figur 1 vom Anker 34 befindliche Ausgleichsräume 54 mit dem Medium des Ölkreislaufs verbindet. Ein vom Zulauf 68 herkommendes Medium liegt deshalb im gesamten elektromagnetischen Schaltventil innen in den Durchgangsbohrungen 51, 52 und auch in den Ausgleichsräumen 54 an, wodurch im Inneren des Schaltventils 10 der gleiche Druck herrscht wie im Zulauf 68. Durch diesen Druckausgleich kann die Federeinrichtung 38 im Vergleich zu herkömmlichen Schaltventilen deutlich geringer dimensioniert werden.

Der wesentliche Vorteil eines solchen elektromagnetischen Schaltventils gemäß Figur 1 und 2 ist darin zu sehen, dass dieses verhältnismäßig klein baut.

### Bezugszeichenliste

- 10: elektromagnetisches Schaltventil
- 12: Gehäuseteil
- 14: Gehäuseteil
- 15: Gewinde
- 16: Steckerflansch
- 18: Kontaktstifte
- 20: O-Ring
- 21: O-Ring
- 22: Spulenträger
- 24: Spule
- 26: metallischer Zylinder
- 28: Rückschlussplatte
- 30: Polkern
- 31: O-Ring
- 34: Anker
- 36: Gleithülse
- 38: Federeinrichtung
- 40: Ventilelement
- 41: Ventilelementstößel
- 42: Ventilelementboden
- 43: Ventilelementkragen
- 44: Ventilelementrand
- 50: Durchgangbohrung
- 52: Durchgangbohrung
- 54: Ausgleichsräume
- 60: Motorblock
- 64: Ablauf
- 68: Zulauf
- 69: Ventilsitz
- 70: Ventilsitzkante
- A: Achse
- X: Detail

## Patentansprüche

1. Elektromagnetisches Schaltventil (10) zum Öffnen oder Schließen eines Öl- oder Kühlmittelkreislaufes in einem Kraftfahrzeug mit einem Elektromagneten, der eine Spule (24) und einen bewegbaren Anker (34) aufweist, wobei der Anker (34) mit einem Ventilelement (40) gekoppelt ist, durch welches ein Ventilsitz (69) in dem Kühlmittelkreislauf verschließbar ist, wobei das Schaltventil (10) druckausgeglichen ausgebildet ist, wobei das Ventilelement (40) in Richtung des Ventilsitzes (69) weisend mindestens annähernd nach innen gewölbt oder zurückspringend ausgebildet ist, das Ventilelement (40) einen mit dem Anker (34) gekoppelten Ventilelementstößel (41) aufweist, welcher an seinem dem Anker (34) abgewandten Ende einen Ventilelementboden (42) aufweist, von dem ein umlaufender Ventilelementkragen (43) in Richtung Ventilsitz (69) hervorspringt, wobei das Ventilelement (40) und der Ventilelementstößel (41) einstückig ausgebildet sind, wobei der Anker (34) und das Ventilelement (40) lose miteinander verbunden sind, und wobei eine Abdichtung zwischen Anker (34) und Ventilstößel (41) angeordnet ist.

2. Elektromagnetisches Schaltventil (10) nach Anspruch 1,
**dadurch gekennzeichnet, dass** das Ventilelement (40) in Richtung Ventilsitz (69) weisend topfförmig oder konkav gestaltet ist.

3. Elektromagnetisches Schaltventil (10) nach Anspruch 1 oder 2,
**dadurch gekennzeichnet, dass** die Abdichtung durch eine spezielle Dichtgeometrie am Bund des Ventilelementstößels (41), der auf dem Anker (34) aufliegt oder durch ein weiteres Dichtelement erfolgt.

4. Elektromagnetisches Schaltventil (10) nach Anspruch 3,
**dadurch gekennzeichnet, dass** der Ventilelementkragen (43) an seinem dem Ventilsitz (69) zugewandten umlaufenden Rand (44) abgeschrägt bzw. abgerundet ist.

5. Elektromagnetisches Schaltventil (10) nach einem der Ansprüche 1 bis 4,
**dadurch gekennzeichnet, dass** das Ventilelement (40) aus Kunststoff gebildet und insbesondere als Spritzgussteil ausgebildet ist.

6. Elektromagnetisches Schaltventil (65) nach einem der Ansprüche 1 bis 5,
**dadurch gekennzeichnet, dass** das Ventilelement (40) entlang seiner gesamten Länge eine insbesonders axiale Durchgangsbohrung (50) aufweist.

7. Elektromagnetisches Schaltventil (10) nach einem der Ansprüche 1 bis 6,
**dadurch gekennzeichnet, dass** der Anker (34) eine entlang seiner gesamten Länge aufweisende Durchgangsbohrung (52) hat.

8. Elektromagnetisches Schaltventil (10) nach einem der Ansprüche 1 bis 7,
**dadurch gekennzeichnet, dass** das Schaltventil (10) auf der dem Ventilelement (40) abgewandten Seite des Ankers (34) eine oder mehrere Ausgleichsräume (54) aufweist.

9. Elektromagnetisches Schaltventil (10) nach einem der Ansprüche 1 bis 8,
**dadurch gekennzeichnet, dass** das Schaltventil (10) eine Federeinrichtung (38) aufweist, durch welche das Ventilelement (40) im stromlosen Zustand des Schaltventils (10) in einer den Ventilsitz (69) geöffneten Stellung ("normally open") gehalten ist.

10. Elektromagnetisches Schaltventil (10) nach einem der Ansprüche 1 bis 8,
**dadurch gekennzeichnet, dass** sich der Ventilsitz (69) in einem Motorblock (60) eines Kraftfahrzeuges befindet und das Schaltventil (10) in oder an dem Motorblock (60) gehalten, insbesondere eingeschraubt ist.

11. Motorblock (60) eines Kfz mit einem am oder im Motorblock (60) festgelegten elektromagnetischen Schaltventil (10) nach einem der Ansprüche 1 bis 10, wobei das Schaltventil (10) im Ölkreislauf des Kfz angeordnet ist.

## Claims

1. Electromagnetic switching valve (10) for opening or closing an oil or cooling medium circuit in a motor vehicle, with an electromagnet which comprises a coil (24) and a moveable anchor (34), wherein the anchor (34) is coupled to a valve element (40), by means of which a valve seat (69) in the cooling medium circuit can be closed, wherein the switching valve (10) is implemented pressure-balanced, wherein the valve element (40) is implemented at least approximately inwardly curved or set back facing in the direction of the valve seat (69), the valve element (40) comprises a valve element tappet (41) which is coupled to the anchor (34) and which comprises, at its end facing away from the anchor (34), a valve element base (42) from which a circumferential valve element collar (42) projects in the direction of the valve seat (69), wherein the valve element (40) and the valve element tappet (41) are implemented in one piece, wherein the anchor (34) and the valve element (40) are loosely attached to each other, and wherein a seal is arranged between the anchor (34) and the valve element tappet (41).

2. Electromagnetic switching valve (10) in accordance with claim 1,
**characterized in that**
the valve element (40), facing in the direction of the valve seat (69), is implemented cup-shaped or concavely.

3. Electromagnetic switching valve (10) in accordance with claim 1 or 2,
**characterized in that** the sealing is realized by means of a special sealing geometry at the collar of the valve element tappet (41), which rests against the anchor (34), or by means of a further sealing element.

4. Electromagnetic switching valve (10) in accordance with claim 3,
**characterized in that**
the valve element collar (43) is beveled or rounded on its circumferential edge that faces the valve seat (69).

5. Electromagnetic switching valve (10) in accordance with any of claims 1 to 4,
**characterized in that**
the valve element (40) is formed of plastic and, in particular, is implemented as an injection molded part.

6. Electromagnetic switching valve (10) in accordance with any of claims 1 to 5,
**characterized in that**
the valve element (40) comprises along its entire length an, in particular, axial through bore (50).

7. Electromagnetic switching valve (10) in accordance with any of claims 1 to 6,
**characterized in that**
the anchor (34) has a through bore (52) extending along its entire length.

8. Electromagnetic switching valve (10) in accordance with any of claims 1 to 7, **characterized in that** the switching valve (10) comprises, on the side of the anchor (34) facing away from the valve element (40), one or more compensation chambers (54).

9. Electromagnetic switching valve (10) in accordance with any of claims 1 to 8,
**characterized in that**
the switching valve (10) comprises a spring device (38), by means of which the valve element (40), when the switching valve (10) is not under current, is retained in an opened position the valve seat ("normally open").

10. Electromagnetic switching valve (10) in accordance with any of claims 1 to 8,
**characterized in that** the valve seat (69) is located in an engine block (60) of a motor vehicle, and **in that** the switching valve (10) is retained in or on the engine block, in particular, is screwed in.

11. Engine block (60) of a motor vehicle with an electromagnetic switching valve (10), in accordance with any of the claims 1to 10, fixed on or in an engine block (10), wherein the engine block (10) is arranged in the oil circuit of the motor vehicle.

## Revendications

1. Electrovanne commandée (10) ouvrant ou fermant un circuit d'huile ou d'agent de refroidissement dans un véhicule automobile, comprenant un électroaimant avec une bobine (24) et un induit mobile (34),
- l'induit (34) étant couplé à un élément de soupape (40) qui permet de fermer un siège de soupape (69) du circuit d'agent de refroidissement,
- l'électrovanne (10) étant équilibrée en pression,
- le côté de l'élément de soupape (40) tourné vers le siège de soupape (69), ayant une forme au moins sensiblement bombée vers l'intérieur ou en retrait, l'élément de soupape (40) ayant une tige de soupape (41) couplée à l'induit (34), cette tige ayant à son extrémité opposée à celle de l'induit (34) un fond d'élément de soupape (42) entouré par une collerette périphérique, d'élément de soupape (43), en saillie en direction du siège de soupape (69),
- l'élément de soupape (40) et la tige de soupape (41) étant en une seule pièce,
- l'induit (34) et l'élément de soupape (40) étant reliés librement l'un à l'autre, et
- un joint est prévu entre l'induit (34) et la tige de soupape (41).

2. Electrovanne commandée (10) selon la revendication 1,
**caractérisée en ce que**
l'élément de soupape (40) est en forme de pot ou de forme concave en direction du siège de soupape (69).

3. Electrovanne commandée (10) selon la revendication 1 ou 2, **caractérisée en ce que**
le joint est appliqué par une géométrie de joint spéciale à la collerette de la tige d'élément de soupape (41) qui s'appuie sur l'induit (34) ou traverse un autre élément d'étanchéité.

4. Electrovanne commandée (10) selon la revendication 3,
**caractérisée en ce que**
le bord (44) périphérique tourné vers le siège de soupape (69) de la collerette de l'élément de soupape (43) est arrondi ou incliné.

5. Electrovanne commandée (10) selon l'une des revendications 1 à 4,
**caractérisée en ce que**
l'élément de soupape (40) est en matière synthétique et notamment sous la forme d'une pièce injectée.

6. Electrovanne commandée (10) selon l'une des revendications 1 à 5,
**caractérisée en ce que**
l'élément de soupape (40) présente sur toute sa longueur, un perçage traversant (50), notamment axial.

7. Electrovanne commandée (10) selon l'une des revendications 1 à 6,
**caractérisée en ce que**
sur toute sa longueur l'induit (34) a un perçage traversant (52).

8. Electrovanne commandée (10) selon l'une des revendications 1 à 7,
**caractérisée en ce que**
sur le côté de l'induit (34) non tourné vers l'élément de soupape (40), l'électrovanne (10) présente une ou plusieurs cavités de compensation (54).

9. Electrovanne commandée (10) selon l'une des revendications 1 à 8,
**caractérisée en ce que**
l'électrovanne (10) comporte un montage de ressort (38) qui maintient l'élément de soupape (40) en position ouverte ("normally open") par rapport au siège (69) lorsque l'électrovanne (10) est coupée du courant.

10. Electrovanne commandée (10) selon l'une des revendications 1 à 8,
**caractérisée en ce que**
le siège de soupape (69) est dans le bloc-moteur (60) d'un véhicule automobile et l'électrovanne (10) est tenue notamment vissée sur ou dans le bloc-moteur (60).

11. Bloc-moteur (60) de véhicule automobile comportant une électrovanne (10) fixée sur ou dans le bloc-moteur (60), selon l'une des revendications 1 à 10, l'électrovanne (10) équipant le circuit d'huile du véhicule.
